# EUROPEAN PATENT SPECIFICATION

(11) **EP 3 579 104 B1**
(45) Date of publication and mention of the grant of the patent: **15.02.2023**
(21) Application number: 19169146.8
(22) Date of filing: 15.04.2019
(51) Int. Cl.: G06F 9/445, G06N 20/00, G06F 9/451, G06F 8/61, G06N 3/04, G06N 5/00, G06N 7/00

(54) **METHOD AND APPARATUS FOR ESTABLISHING AN APPLICATION PREDICTION MODEL, STORAGE MEDIUM AND TERMINAL**
VERFAHREN UND VORRICHTUNG ZUR ERSTELLUNG EINES ANWENDUNGSVORHERSAGEMODELLS, SPEICHERMEDIUM UND ENDGERÄT
PROCÉDÉ ET APPAREIL D'ÉTABLISSEMENT DE MODÈLE DE PRÉDICTION D'APPLICATION, SUPPORT D'INFORMATIONS ET TERMINAL

(30) Priority: 29.05.2018 CN 201810530136
(43) Date of publication of application: 11.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: CHEN, Yan, Dongguan, Guangdong 523860 (CN); LIU, Yaoyong, Dongguan, Guangdong 523860 (CN)
(74) Representative: Manitz Finsterwald Patent- und Rechtsanwaltspartnerschaft mbB

(56) References cited:
- CN-A- 107 678 803
- CN-A- 107 783 801
- US-A1- 2014 372 356

## Description

### TECHNICAL FIELD

The present disclosure relates to the technical field of preloading an application, and in particular, to a method and an apparatus for establishing an application prediction model, a storage medium, and a terminal.

### BACKGROUND

At present, terminals such as smart phones, tablets, notebook computers, and smart home appliances have become indispensable electronic devices in people's daily lives. As terminal devices have become more and more intelligent, most terminal devices are loaded with an operating system, enabling the terminal devices to install a wide variety of applications so as to meet different user needs.

As the configuration of terminal devices is constantly updated, dozens or even hundreds of applications can be installed in most terminal devices. As the functions of the applications become more and more abundant, the resources required for running the applications are also increased. When the user chooses to start an application, the terminal loads the resources required for the application to start. After the loading is completed, the terminal enters the initial interface of the application. The whole process usually takes several seconds or even ten seconds, resulting in a lower efficiency of starting the application.
CN 107 783 801 A discloses a method and an apparatus for preloading an application and for generating an application prediction model. Via a module of the apparatus, an application running in foreground is determined at a sampling time in a preset sampling period. Further, it is determined whether the application is used within a time window having a preset time length and ending with the sampling time, to obtain usage association information of the application. Finally, a preset machine learning model is trained based on the usage association information of the application.

### SUMMARY

It is an object of the invention to provide a method and an apparatus for establishing an application prediction model, a storage medium, and a terminal which can optimize a preloading scheme of an application in a terminal. This object is satisfied by the subject matter of the independent claims.

A first aspect of the present disclosure provides a method of establishing an application prediction model including:
determining at least one first application running in foreground at a sampling time in a preset sampling period;
determining whether the at least one first application is newly installed within a time window having a preset time length and ending with the sampling time, to obtain identity information of the at least one first application, wherein the identity information is configured to identify whether or not the at least one first application is newly installed; and
training a preset machine learning model based on sample data corresponding to the at least one first application and a sample identity of the sample data,
wherein the sample data corresponding to the at least one first application includes a preorder use sequence of the at least one first application, wherein the preorder use sequence refers to a temporal sequence, during a preset time period traced backward from a switching time of an application running in foreground, of use of applications related to the at least one first application which is currently running,
wherein the sample identity of the sample data includes the at least one first application and the identity information of the at least one first application,
wherein after obtaining the application prediction model, the method further comprises:
predicting a target application to be started based on the application prediction model when an application-preloading prediction event is triggered (505, 606); and
preloading the target application (506); and
wherein preloading the target application comprises:
   preloading (607) an application interface (401) corresponding to the target application based on a preloaded active window stack (202) which is created beforehand, wherein boundary coordinates corresponding to the preloaded active window stack (202) are outside a coordinate range of a display screen (201, 301);
   wherein the step of determining whether the at least one first application is newly installed within a time window having a preset time length and ending with the sampling time and using the result of the determining as identity information of the at least one first application includes:
      when a preset time in the preset sampling period is reached, determining, for each one of the at least one first application determined at one or more sampling times in the preset sampling period, whether the one of the at least one first application is newly installed within the time window having the preset time length and ending with a time when the one of the at least one first application is opened, and using a result of the determining as the identity information of the one of the at least one first application, until the preset sampling period ends.

A second aspect of the present disclosure provides an apparatus for establishing an application prediction model including:
an application determining module configured to determine at least one first application running in foreground at a sampling time in a preset sampling period;
an identity information determining module configured to determine whether the at least one first application is newly installed within a time window having a preset time length and ending with the sampling time to obtain identity information of the at least one first application, wherein the identity information is configured to identify whether or not the at least one first application is newly installed; and
a prediction model training module configured to train a preset machine learning model based on sample data corresponding to the at least one first application and a sample identity of the sample data, wherein the sample corresponding to the at least one first application include a preorder use sequence of the at least one first application, wherein the preorder use sequence refers to a temporal sequence, during a preset time period traced backward from a switching time of an application running in foreground, of use of applications related to the at least one first application which is currently running,
wherein the sample identity of the sample data includes the at least one first application and the identity information of the at least one first application;
wherein the apparatus further comprises:
   a module configured to predict a target application to be started based on the application prediction model when an application-preloading prediction event is triggered; and
   preload the target application; and
   wherein the preloading the target application comprises:
      preloading an application interface corresponding to the target application based on a preloaded active window stack which is created beforehand, wherein boundary coordinates corresponding to the preloaded active window stack are outside a coordinate range of a display screen;
      wherein the identity information determining module is configured to:
         when a preset time in the preset sampling period is reached, determine, for each one of the at least one first application determined at one or more sampling times in the preset sampling period, whether the one of the at least one first application is newly installed within the time window having the preset time length and ending with a time when the one of the at least one first application is opened, and use a result of the determining as the identity information of the one of the at least one first application, until the preset sampling period ends.

In a third aspect, an embodiment of the present disclosure provides a non-transitory computer readable storage medium having a computer program stored thereon, wherein the program causes, when executed by a processor of a terminal, the terminal to perform the method of establishing an application prediction model according to the first aspect of the present disclosure.

In a fourth aspect, an embodiment of the present disclosure provides a terminal including a processor and a memory for storing a computer program operable on the processor, wherein the processor executes the computer program to implement the method of establishing an application prediction model according to the first aspect of the present disclosure.

In the solution of establishing an application prediction model provided in embodiments of the present application, a first application running in foreground at a sampling time is determined in a preset sampling period, it is determined as to whether the first application is newly installed within a time window which has a preset time length and ends with the sampling time, and a result of the determining is used as information corresponding to the first application, and then a preset machine learning model is trained according to sample data corresponding to the first application, the first application, and the information corresponding to the first application to obtain the application prediction model, wherein a sample corresponding to the sample data includes the information corresponding to the first application and the first application. By adopting the above technical solution, the application prediction model can learn the user's preference for the newly installed applications, and the precision of training the application prediction model can be effectively improved, thereby improving the accuracy in predicting the application to be started.

### BRIEF DESCRIPTION OF THE DRAWINGS

FIG. 1 is flow chart of a method of establishing an application prediction model provided in an embodiment of the present disclosure;
FIG. 2 is a schematic diagram of a relative position relationship between a preloaded active window stack and a display area on a display screen provided in an embodiment of the present disclosure.
FIG. 3 is a schematic diagram of another relative positional relationship between a preloaded active window stack and a display area on a display screen provided in an embodiment of the present disclosure.
FIG. 4 is a schematic diagram of migration of an application interface provided in an embodiment of the present disclosure.
FIG. 5 is a flow chart of another method of establishing an application prediction model provided in an embodiment of the present disclosure.
FIG. 6 is a flow chart of still another method of establishing an application prediction model provided in an embodiment of the present disclosure.
FIG. 7 is a block diagram of an apparatus for establishing an application prediction model provided in an embodiment of the present disclosure.
FIG. 8 is a block diagram of a terminal provided in an embodiment of the present disclosure.
FIG. 9 is a block diagram of another terminal provided in an embodiment of the present disclosure.

### DETAILED DESCRIPTION

The technical solutions of the present application will be further described below with reference to the accompanying drawings and specific embodiments. It is understood that the specific embodiments described herein are merely illustrative of the application and are not intended to limit the application. In addition, it should be noted that, for the convenience of description, only some but not all of the structures related to the present application are shown in the drawings.

Before discussing the exemplary embodiments in more detail, it should be noted that some exemplary embodiments are described as a process or method as depicted in a flowchart. Although the flowcharts describe the various steps as a sequential process, many of the steps can be implemented in parallel, concurrently, or synchronously. In addition, the order of the steps can be rearranged. The process may be terminated when its operation is completed, but may also have additional steps which are not included in the figures. The processing may correspond to methods, functions, procedures, subroutines, subprograms, and the like.

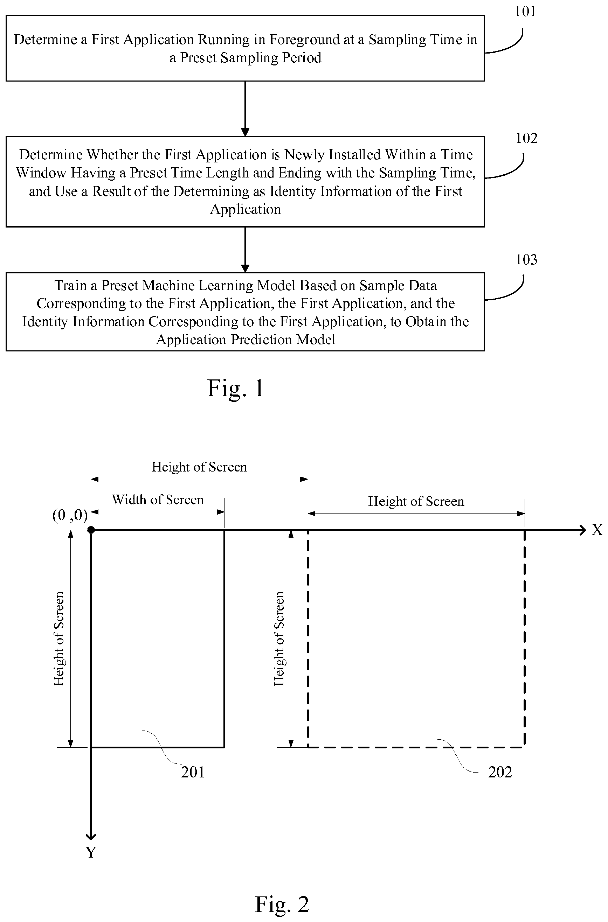

FIG. 1 is a flowchart of a method of establishing an application prediction model provided in an embodiment of the present disclosure. The method may be implemented by an apparatus for establishing an application prediction model, wherein the apparatus may be implemented in software and/or hardware, and generally may be integrated into a terminal. As shown in FIG. 1, the method includes:
Step 101, determine a first application running in foreground at a sampling time in a preset sampling period.

Illustratively, the terminal in embodiments of the present disclosure may include a terminal device such as a mobile phone, a tablet computer, a notebook computer, and a smart home appliance. An operating system is loaded in the terminal.

According to the invention, the preset sampling period may be understood as a time period for acquiring training samples of the application prediction model. That is, during a preset sampling period (which may also be understood as a preset time period), training samples of the application prediction model are acquired. In some examples, each sampling time in the preset sampling period may be set as a time when an application running in foreground is switched. That is, each of switch times of an application running in foreground is used as a sampling time. In some examples, in the preset sampling period, the start time of the collection period may be preset, and each of times at preset intervals is used as a sampling time. It may be understood that the first application running in foreground is sampled every preset interval. It should be noted that the manner in which the sampling time is set is not limited in embodiments of the present disclosure. Exemplarily, the preset sampling period is two weeks, and the state feature information is collected every one hour during the two weeks. For example, 8:00 is the first sampling time, and the first application running in foreground, such as application A, is determined at 8:00; 9:00 is the second sampling time, and the first application running in foreground at this moment, such as application B, is determined, ..., and so on, until the end of the preset sampling period.

Step 102, determine whether the first application is newly installed within a time window having a preset time length and ending with the sampling time, and use a result of the determining as identity information of the first application.

According to the invention, during the use of the terminal, the user may install a new application on demand. Generally, the user frequently uses the newly installed application for a period of time just after the installation. However, the training sample data of the existing application prediction model contains very few data records relating to the newly installed applications, which results in that applications to be preloaded which are predicted by the application prediction model obtained by training with such training sample data hardly contain those newly installed. Thus, especially soon after the application is newly installed, the newly installed application is often slow to start because there is no preloading of the newly installed application. Therefore, the inventor(s) realized that in the training of the application prediction model, the application can be added with identity information identifying whether or not the application is newly installed, so that the application prediction model learns the user's preference for the newly installed application during the training.

Exemplarily, for each of the first applications running in foreground obtained at each sampling time, it is determined whether or not the first application is newly installed within a time window having a preset time length and ending with the sampling time, and the result of the determining is used as identity information of the first application. For example, if the first application is newly installed, the identity information of the first application may be set to 1; if the first application is not newly installed, the identity information of the first application may be set to 0. The time window having a preset time length and ending with the sampling time can be regarded as a preset time period which is traced backward from the sampling time. Exemplarily, if the sampling time is 12:00, then determine the first application running in foreground at 12:00. If the preset time length of the time window is set as 30 minutes, then it is determined whether the first application is newly installed during the period of 11:30-12:00. For example, if it is determined that the first application running in foreground at 12:00 is Meituan Takeaway, and the installation time of Meituan Takeaway is 10:00, then it is determined that Meituan Takeaway is not newly installed and the identity information of Meituan Takeaway can be set to 0. For another example, if it is determined that Gaode Map is the first application running in foreground at 12:00, and the installation time of Gaode Map is 11:45, then it is determined that Gaode Map is a newly installed application, and then the identity information of Gaode Map can be set to 1. It should be noted that the preset time length of the time window is not specifically limited in embodiments of the present disclosure, and may be 30 minutes, 1 hour, 1 day, or the like.

Step 103, train a preset machine learning model based on sample data corresponding to the first application, the first application, and the identity information of the first application, to obtain the application prediction model.

A sample identity of the sample data includes the identity information of the first application and the first application.

According to the invention, the sample data corresponding to the first application may include a preorder use sequence of the first application. In this case, the preorder use sequence of the first application may be used as sample data corresponding to the first application, and the first application and the identity information of the first application may be used as a sample identity of the sample data. It can be understood that the data format of the training samples (sample data with sample identities) used in generating the application prediction model is (APPₜ₋ₙ, APPₜ₋ₙ₊₁, ..., APPₜ₋₁→APPₜ, identity information of APPt), wherein (APPₜ₋ₙ, APPₜ₋ₙ₊₁, ..., APPt-i) represents a first preorder use sequence, and (APPₜ, identity information of APPₜ) represents a sample identity of the first preorder use sequence. In some examples, the sample data corresponding to the first application may include state feature information corresponding to the sampling time. That is, the state feature information corresponding to the sampling time is used as the sample data corresponding to the first application, and the first application and the identity information of the first application may be used as a sample identity of the sample data. It should be understood that the data format of the training samples (sample data with sample identities) used in generating the application prediction model can be expressed as: (state feature information → APPₜ, identity information of APPₜ), wherein (state feature information) represents the sample data, and (APPₜ, identity information of APPₜ) represents a sample identity of the state feature information. It should be noted that embodiments of the present disclosure do not limit the specific data content included in the sample data corresponding to the first application.

Exemplarily, the preset machine learning model is trained based on the sample data corresponding to the first application, the first application, and the identity information of the first application, to obtain the application prediction model. With the addition of identity information of the first application, the network parameters of the application prediction model can be adjusted during the training of the application prediction model so as to increase the weight value for the newly installed applications, thereby enabling to learn about the preferences of users for newly installed applications. The preset machine learning model or the algorithm used in training the application prediction model may include a Recurrent Neural Network (RNN), a Long Short-Term Memory (LSTM) network, a Gated Recurrent Unit, a Simple Recurrent Unit, an Auto Encoder, a Decision Tree, a Random Forest, a Feature-means Classification, a Classification And Regression Tree, a Hidden Markov, a K-Nearest Neighbor (KNN) Algorithm, a Logistic Regression Model, a Bayesian Model, a Gaussian Model, a KL Divergence ( Kullback-Leibler divergence), and so on. Embodiments of the present disclosure do not have any limit about this.

In the method of establishing an application prediction model provided in embodiments of the present disclosure, the following steps are described: determining a first application running in foreground at a sampling time in a preset sampling period, determining whether the first application is newly installed within a time window having a preset time length and ending with the sampling time, and using the result of the determining as identity information of the first application and then training a preset machine learning model based on sample data corresponding to the first application, the first application, and the identity information of the first application to obtain the application prediction model, wherein a sample identity of the sample data includes the first application and the identity information of the first application. By adopting the above technical solution, the application prediction model can learn the user's preference for the newly installed applications, and the precision of training the application prediction model can be effectively improved, thereby improving the accuracy in predicting an application to be started.

According to the invention, the step of determining whether the first application is newly installed within a time window having a preset time length and ending with the sampling time and using the result of the determining as identity information of the first application includes: when a preset time in the preset sampling period is reached, determining, for each one of one or more first applications determined at one or more sampling times in the preset sampling period, whether the one of the one or more first applications is newly installed within a time window having the preset time length and ending with a time when the one of the one or more first applications is opened, and using a result of the determining as the identity information of the one of the one or more first applications, until the preset sampling period ends. The advantage of this arrangement lies in that the data amount to be processed in determining whether or not the first application acquired in the preset sampling period is newly installed can be greatly reduced while ensuring the precision of training the application prediction model, and the speed of training the application prediction model can also be improved.

Exemplarily, in the entire preset sampling period, it is possible that a first application may be newly installed with respect to the sampling time of this first application, but may be an application which has been installed for a long time rather than being newly installed with respect to the end time of the entire preset sampling period. If for each of first applications acquired at sampling times in the preset sampling period, it is determined as to whether the first application is newly installed within the time window having the preset time length and ending with the sampling time, the precision of training the application prediction model may be affected. Therefore, when the preset time in the preset sampling period is reached, it can be determined for each one of the determined first applications as to whether the one of the first applications is newly installed within the time window having the preset time length and ending with the time when the one of the first applications is opened, and the result of the determining is used as the identity information of the one of the first applications until the preset sampling period ends. With respect to the time period from the start time of the preset sampling period to the preset time, for the determined first applications, the currently-determined first application can be directly determined to be not a newly installed application, and the result of the determining can be used as the identity information of the current first application. That is, the identity information of the determined first application may be set to be not a newly installed application (e.g., set to 0) from the start time of the preset sampling period to the preset time.

Exemplarily, the middle time of the preset sampling period or a time at one third of the preset sampling period may be set as the preset time. In embodiments of the present disclosure, the preset time is not limited to a specific time in the preset sampling period. For example, if the preset sampling period is one month and there is 30 days in this month, the middle day of the month can be set as the preset time. That is, from the 16th day in the preset sampling period, it is determined for each one of the determined first applications as to whether the one of the first applications is newly installed within the time window having the preset time length and ending with the time when the one of the first applications is opened, and the result of the determining is used as the identity information of the one of the first applications until the end of 30 days. For the first day to the 15th day, the determined first applications can be directly regarded as not newly installed applications.

In some embodiments, the step of determining a first application running in foreground at a sampling time in a preset sampling period includes: determining, when a switching of an application running in foreground is detected in the preset sampling period, the first application running in foreground after the switching; correspondingly, the step of training a preset machine learning model based on sample data corresponding to the first application, the first application, and the identity information of the first application includes: obtaining a first preorder use sequence of the first application, and using the first preorder use sequence as the sample data corresponding to the first application; and training the preset machine learning model based on the sample data corresponding to the first application, the first application, and the identity information of the first application. The advantage of this arrangement lies in that the determining of the first application running in foreground after the switching can be made upon the switching of the application running in foreground is detected, which can effectively avoid collecting too many useless first applications and sample data corresponding to the first application and using the use sequences of the applications as training samples for the application prediction model, and can improve the speed of training and generating the application prediction model and the accuracy of the application prediction model.

In some embodiments of the present disclosure, upon detecting the switching of the application running in foreground, the determining of the first application running in foreground after the switching and the obtaining of the first preorder use sequence of the first application can be made. The first preorder use sequence can be considered as a temporal sequence, during a preset time period traced backward from the switching time of the application running in foreground, of use of applications related to the first application which is currently running. The first preorder use sequence includes at least one application. Exemplarily, when the switching of application B to application A is detected, it indicates that the switching of the application running in foreground is detected. At this moment, the first application running in foreground after the switching is application A, while the application running at last moment is application B. Thus, the first preorder use sequence of the application A running in foreground after the switching is: application B. Further exemplarily, if the first application running in foreground at this moment is application C, the application running in foreground at last moment is application D, and the application running in foreground at the previous moment of the last moment is application E, it can be understood that, firstly, application E switched to application D, and then application D switched to application C. Then, the first application currently running in foreground after the switching is application C, and the first preorder use sequence of application C can be expressed as: application E-application D. It should be noted that embodiments of the present disclosure do not limit the number of applications included in the first preorder use sequence of the first application.

Exemplarily, the first application is application A, and the first preorder use sequence of application A is: application B-application C-application D-application E. In the case that the first preorder use sequence is used as the sample data corresponding to the first application, one of the training samples used in generating the application prediction model is: (Application B, Application C, Application D, Application E → Application A, identity information of Application A), wherein (application B, application C, application D, application E) represents one piece of sample data, and (application A, identity information of application A) represents the sample identity of this piece of sample data.

In some examples, before training the preset machine learning model based on the sample data corresponding to the first application, the first application, and the identity information of the first application, the method can further includes: obtaining state feature information corresponding to an acquisition time (which is the sampling time) of each application in the first preorder sequence and using the first preorder use sequence and the state feature information corresponding to the acquisition time of each application in the first preorder use sequence as the sample data corresponding to the first application. In this case, the data format of the training samples (sample data with sample identities) used in generating the application prediction model can be expressed as (APPₜ₋ₙ, Tₜ₋ₙ, APPₜ₋ₙ₊₁, Tₜ₋ₙ₊₁, ..., APPₜ₋₁, Tₜ₋₁→APPₜ, identity information of APPt), wherein (APPₜ₋ₙ, Tₜ₋ₙ, APPₜ₋ₙ₊₁, Tₜ₋ₙ₊₁, ..., APPₜ₋₁, Tₜ₋₁) represents sample data corresponding to the first application, (APPₜ₋ₙ, APP_{t- n+1}, ... , APPₜ₋₁) represents the first preorder use sequence of the first application, and (APPt-n, Tt-n) represents the combination of an application in the first preorder use sequence and the state feature information corresponding to the acquisition time of the application, and (APPt, identity information of APPt) represents the sample identity of the sample data (APPₜ₋ₙ, Tₜ₋ₙ, APPₜ₋ₙ₊₁, Tₜ₋ₙ₊₁, ..., APPₜ₋₁, Tₜ₋₁).

In some embodiments, before training the preset machine learning model based on the sample data corresponding to the first application, the first application, and the identity information of the first application, the method also includes: determining whether each one of applications in the first preorder use sequence is newly installed within a time window having the preset time length and ending with a time when the one of the applications is opened, and using a result of the determining as identity information of the one of the applications; correspondingly, the step of training a preset machine learning model based on sample data corresponding to the first application, the first application, and the identity information of the first application includes: training the preset machine learning model based on the first preorder use sequence, identity information of each application in the first preorder use sequence, the first application, and the identity information of the first application, wherein the identity information of each application in the first preorder use sequence is included in the sample data corresponding to the first application. The advantage of this arrangement lies in that by determining whether each one of applications in the first preorder use sequence is a newly installed application, using the result of the determining as the identity information of the one of the applications, and using the identity information of each application in the first preorder use sequence as a part of the sample data corresponding to the first application, the dimension of the sample data used in training the application prediction model can be increased, and the user's use preference for the newly installed applications can be learned, thereby further improving the accuracy of the application prediction model.

Exemplarily, the first application is application F, and the first preorder use sequence of application F is: application A-application B-application C-application D-application E. For example, the preset time length of the time window is set as 1 hour, application A is opened at 8:00, its installation time is 7:30, application B is opened at 9:00, and its installation time is 7:00. Then, it can be considered that application A is a newly installed application, and " 1" can be used as the identity information of application A, and application B is not a newly installed application, and "0" can be used as the identity information of application B. According to the determining method as described in the above, if it is sequentially determined that in the first preorder use sequence, the identity information of application C is "0", the identity information of application D is "0", the identity information of application E is "1", but the identity information of the first application which is application F is "0", then the sample data with the sample identities described above can be expressed as: (application A, 1, application B, 0, application C, 0, application D, 0, application E, 1 → application F, 0) .

In some embodiments, the step of training a preset machine learning model based on sample data corresponding to the first application, the first application, and the identity information of the first application includes: obtaining state feature information corresponding to the sampling time, and using the state feature information as the sample data corresponding to the first application; and training the preset machine learning model based on the sample data corresponding to the first application, the first application and the identity information of the first application. The benefit of this arrangement lies in that the accuracy in predicting an application to be started with the application prediction model can be further improved.

In some embodiments of the present disclosure, the state feature information corresponding to each sampling time is acquired in the preset sampling period, and the state feature information corresponding to individual sampling times is respectively used as sample data corresponding to the first applications determined at individual sampling times. Exemplarily, the preset sampling period is two weeks, the first application running in foreground and the state feature information corresponding to the sampling time are collected every one hour in the two weeks, and the preset time period is set to 10 minutes. For example, the first data collection is performed at 8:00, the first application running in foreground is determined as, for example, application A, and the state feature information corresponding to the current moment is collected, which can be recorded as, for example, the first state feature information; the second data collection is performed at 9:00, the first application running in foreground is determined as, for example, application B, and the state feature information corresponding to the current moment is collected, which can be recorded as, for example, the second state feature information, ..., and so on, until the preset sampling period ends. The state feature information may include at least one of the following: time information, date category, on/off state of a mobile data network, connection status of a wireless hotspot, identity information of a connected wireless hotspot, a previous foreground application, plug-in status of a headphone jack, charging status, battery level information, display duration of a screen, motion status of a terminal, location information, Bluetooth connection status, or last screen-off time.

Exemplarily, if the state feature information includes time information, date category, charging status, battery level information, location information, and Bluetooth connection status, then the data format of the training samples (sample data with sample identities) used in generating the application prediction model can be expressed as: (*TimeSolt, Weekday, Ch*arg*ing, Battery, Bluetooth, Location* → *APPₜ*, *Identity*) , wherein *TimeSolt* represents the time information, *Weekday* represents the date category such as workday or holiday, *Ch*arg*ing* represents the charging status, *Battery* represents the battery level information, *Location* represents the location information, *Bluetooth* represents the Bluetooth connection status, *APPₜ* represents the first application, and *Identity* represents the identity information of the first application.

In some embodiments, after obtaining the application prediction model, the method further includes: predicting based on the application prediction model a target application to be started when an application-preloading prediction event is triggered; and preloading the target application. The advantage of this arrangement lies in that the target application to be preloaded can be predicted quickly with the application prediction model, and the startup speed of the target application can be improved.

Exemplarily, the triggering condition of an application-preloading event may be set based on an actual situation, which is not specifically limited in embodiments of the present disclosure. For example, the application-preloading event can be triggered upon detecting that the user's action satisfies a preset condition (such as picking up the terminal, inputting a screen-unlocking operation, or inputting a terminal-unlocking operation, etc.), or upon detecting that the foreground application is changed or immediately (or a preset time) after the prediction process of the application to be preloaded ends, or at regular intervals. After the application-preloading event is triggered, the system can detect that the application-preloading event has been triggered by reading a flag bit or receiving a triggering instruction. The specific detection mode is not limited in embodiments of the present disclosure.

Exemplarily, the application to be preloaded can be understood as an application that the user possibly will open, which may be a fixed application that is set in advance, an application that is predicted in a certain manner, or the like. The application to be preloaded may include one or more applications.

In some embodiments of the present disclosure, determining the target application may include determining the target application based on a result previously outputted from the application prediction model, or may include performing prediction with the application prediction model and determining the target application based on a result currently outputted from the application prediction model.

In some embodiments of the present disclosure, when the target application includes multiple (N) applications, the application prediction model may output a startup probability of each candidate application in the candidate application set, and a candidate application with a higher startup probability can be determined as the target application. In some examples, determining the target application includes: predicting respective startup probabilities of the candidate applications; and determining a preset number of candidate applications with higher startup probabilities as the target applications. Exemplarily, the candidate applications may include all or some of applications installed in the terminal. The some of applications may not include system applications, and may not include applications that are rarely used by users. The manner of determining the candidate applications and the number thereof are not limited in embodiments of the present disclosure. In some examples, the candidate applications may be determined based on the number of uses and/or the duration of use of each application within a preset time period before the current time, wherein the preset time period is for example one month. When the number of uses and/or the duration of use exceed corresponding thresholds, corresponding application(s) is determined as a candidate application. Alternatively, individual applications are sorted based on the number of uses and/or the duration of use, and the top-ranked application(s) is determined as a candidate application.

Exemplarily, the startup probabilities of individual candidate applications can be determined with the application prediction model described above. For example, the current sample is collected based on the training sample data used in training the application prediction model, and is inputted into the application prediction model to obtain the startup probabilities of individual candidate applications. The candidate applications can be ranked in the order of respective startup probabilities from high to low, and the candidate application(s) ranked in the top N (N is a preset value) is determined as the application(s) to be loaded. The advantage of this arrangement lies in that multiple applications can be preloaded, and the accuracy of the prediction can be improved because the multiple applications are determined based on the startup probabilities.

In embodiments of the present disclosure, the specific process of preloading and the loaded resources are not limited, and the preloading of a target application is taken as an example for description. For example, corresponding hardware resources can be allocated for the target application, and relevant data required for the startup can be loaded based on the allocated hardware resources. Exemplary, it may include startup of the application process, startup of the application service, allocation of the memory, reading of file content, acquisition of network data, and interface rendering, etc. In addition, the preloaded resources can be determined based on the specific type of the target application. For example, if the target application is a social software, then the splash screen, the contact list and the recent message record in the target application can be preloaded; if the target application is a game, data related to the game background and the like can be preloaded.

According to the invention, preloading the target application includes: preloading an application interface corresponding to the target application based on a preloaded active window stack which is created beforehand, wherein boundary coordinates corresponding to the preloaded active window stack are outside a coordinate range of the display screen.

In some embodiments of the present disclosure, the active window can be understood as an independent interface that provides interactions and operations directly to a user, and different words may be used to name the interface in different operating systems. For ease of understanding, the following illustration is made with an Android operating system as an example.

In an Android system, an active window is called an Activity. An Activity is a component responsible for interacting with a user. It provides a screen (which can be understood as a screen interface rather than a physical display screen) for a user to interact so as to perform a task. In an android application, an Activity is usually a separate screen that can display some controls thereon and listen and handle user events. As for management of the Activity, there are two concepts: Task (i.e., a task stack) and Stack (i.e., an active window stack). A Task corresponds to an application. The Task is used to store an Activity. One Task can store one or more Activities, and these Activities follow the principle of "first in, last out and last in, first out". A Stack in turn is used to manage the Tasks. Usually, one Stack manages Tasks to which individual Activities needed for one screen to display. One Stack can manage one or more Tasks. A Stack also follows the basic management principles of stacks. The screen described here is not necessarily a complete and independent display screen. Taking "two screens" as an example, these two screens may be just two areas in a whole display screen that independently display their own display contents, respectively. In some examples, if the terminal has two or even more independent display screens, "two screens" can also be two independent display screens.

In an Android system, a multi-window mode is supported, which can include a split-screen mode, a picture-in-picture mode, and a free form. In a multi-window mode, the stack in which the application is included can have its own size, which can include the top, bottom, left, and right coordinates in a coordinate system with the top left corner of the terminal screen as the origin. For example, (a, b, c, d) generally describes the boundary of a rectangle which can be represented by the coordinate of the top left corner of the rectangle and the coordinate of the bottom right corner. That is, the coordinate of the top left corner of the rectangle is (a, b), and the coordinate of the bottom right corner is (c, d). Such a rectangular area corresponds to the size of the stack. The internal layout of applications in the stack is based on the size of the stack, which means that the application interface corresponding to an Activity is displayed within the boundary of the size.

In a multi-window mode, multiple applications can be allowed to be visible for both the system and a user or for only the system. The term "visible for both the system and a user" refers to being displayed on the display screen and being visible for a user; the term "visible for only the system" refers to being visible for only the operating system and being invisible for a user, probably because of being blocked by the application in foreground or displayed outside the display screen as implemented by the present disclosure.

In some embodiments of the present disclosure, preloading an application interface of the target application outside the display screen may be implemented based on a multi-window mechanism of the operating system. The size corresponding to the application is set outside the display screen through the multi-window mechanism so as to achieve the purpose of being invisible to a user, so that the display on the display screen of the display content of the foreground application is not affected.

Generally, in the multi-window mode, there may be multiple types of stacks, such as Home Stack representing the stack of display of desktop applications, App Stack representing the stack of display of third-party applications, and other split screen stacks, etc. These three stacks mentioned above, which include content that can be displayed on the display screen, are collectively referred to as an application active window stack in embodiments of the present disclosure. In some embodiments of the present disclosure, a preloaded active window stack (referred to as a preloaded stack) is newly added to represent the stack of display of preloaded applications, and the boundary coordinates of the preloaded stack are set outside the coordinate range of the display screen. The application to be preloaded can be displayed in the Stack. For an Android system, a new stack dedicated to displaying preloaded applications can be created based on the multi-window mechanism of the Android system. In embodiments of the present disclosure, the reason for creating a new stack lies in that the newly created preloaded stack can have its own size and visibility so that the purpose of preloading outside the display screen is achieved.

In embodiments of the present disclosure, the creation time of the preloaded stack is not limited. The preloaded stack can be set to be in a resident state by default before a terminal leaves the factory, which means the preloaded stack is always present; it can also be created after the terminal is powered on or successfully unlocked; it can also be created after the application-preloading event is triggered (it is possible to be before the target application is determined); and so on. In some examples, the step of preloading an application interface corresponding to the target application based on a preloaded active window stack which is created beforehand includes: determining whether there is a preloaded active window stack which is created beforehand; if not, creating a preloaded active window stack based on a preset rule; preloading the application interface corresponding to the target application based on the created preloaded active window stack. The advantage of this arrangement lies in that system resources can be saved by determining whether or not the preloaded stack exists after determining the target application to be preloaded, creating one if it does not exist and not creating if it exists. It should be understood that, when the target application includes multiple applications, that is, when multiple applications need to be preloaded continuously in a short time, the preloaded stack is created before starting to load the first target application and then it is not necessary to make the above determining of a preloaded active window stack which is created beforehand before starting to load the second target application because the preloaded stack already exists.

In embodiments of the present disclosure, the specific process of preloading the application interface corresponding to the target application is not limited. For example, the application interface can be drawn and displayed based on the size of the preloaded stack.

In some embodiments, the step of preloading an application interface corresponding to the target application based on a preloaded active window stack which is created beforehand includes: creating a target process corresponding to the target application; Creating a task stack corresponding to the target application in the preloaded active window stack which is created beforehand; launching an active window corresponding to the target application in the task stack based on the target process; drawing and displaying the application interface corresponding to the target application based on the launched active window. The advantage of this arrangement lies in that the application interface corresponding to the target application can be drawn and displayed based on the preloaded active window stack outside the coordinate range of the screen without interfering with the operation and display of the foreground application, ensuring the system stability and effectively improving the speed of starting target applications. The method can also include an initialization process of the target process while creating the target process. During the execution of these foregoing steps, preloading of other resources may be involved in, such as startup of the application service, allocation of the memory, reading of file content, acquisition of network data, and so on. Embodiments of the present disclosure have no limits on the preloading process of other resources.

In some embodiments, after preloading an application interface corresponding to the target application based on a preload active window stack which is created beforehand, the method further includes: when receiving an instruction of running the target application, migrating the application interface corresponding to the target application included in the preloaded active window stack to the display screen for display. The advantage of this arrangement lies in that when the target application really needs to be started, a quick switching of the application interface can be achieved by directly migrating the application interface which has been drawn to the display screen for display, thereby improving the speed of startup.

In some embodiments, the step of migrating the application interface corresponding to the target application included in the preloaded active window stack to the display screen for display includes: migrating the task stack corresponding to the target application included in the preloaded active window stack to the top of the application active window stack; updating size information, configuration information, and visibility of the task stack so that the application interface corresponding to the target application is displayed on the display screen. The advantage of this arrangement lies in that the stability during the interface migration can be ensured so as to make sure that the problems such as choppy screen, black screen, slow migration speed or the like will not arise during the recovery process of the application interface.

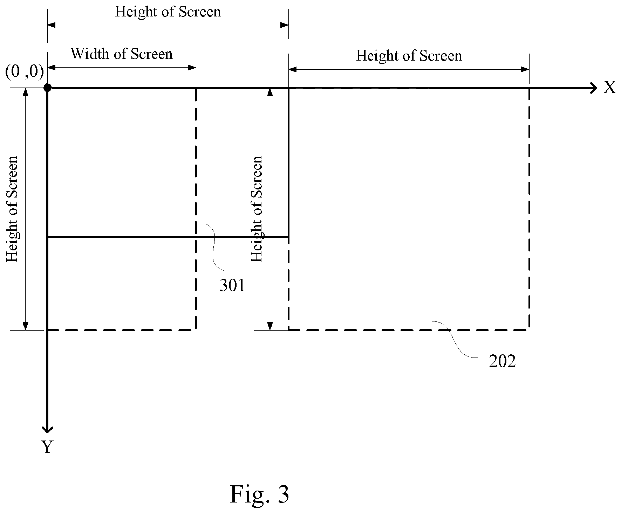

For some terminals, especially mobile terminals such as mobile phones and tablets, for ease of use by a user, the display mode of the display screen usually includes a vertical display mode and a horizontal display mode. Many applications use the vertical display mode by default for display. Some application (such as some online games) defaults to display in a horizontal display mode. Some applications also switch between the horizontal and vertical display modes with changes of the direction in which the user holds the terminal during the use of the terminal. In some embodiments of the present disclosure, the boundary coordinates of the preloaded active window stack are (H, 0, 2H, H), wherein the coordinate system corresponding to the boundary coordinates is system coordinates, the origin of which is the top left corner of the display screen, and H is the length of the long side of the display area of the display screen. That is, the side corresponding to H is the longest side of the display area of the display screen, which is the height of the display screen in the vertical display mode and the width of the display screen in the horizontal display mode. The purpose of this arrangement is to take into account the horizontal screen of the display screen, the horizontal display of the preloaded application and normal displays of some applications. FIG. 2 is a schematic diagram of a relative position relationship between the preloaded active window stack and the display area of the display screen provided in an embodiment of the present disclosure. As shown in FIG. 2, the display screen is in the vertical display mode, the origin of the terminal system coordinates is the left vertex (0, 0) of the display screen 201, the width direction of the display screen 201 is the X axis, and the height direction is the Y axis. The boundary coordinates of the preloaded Stack 202 are (H, 0, 2H, H), wherein H is the height of the screen, that is, the area within the left solid rectangle is the main screen display area, and the area within the right dotted rectangle is the preloaded display area. FIG. 3 is a schematic diagram of another relative position relationship between a preloaded active window stack and a display area of the display screen provided in an embodiment of the present disclosure. As shown in FIG. 3, the display screen is in the horizontal display mode, the origin of the terminal system coordinates is the left vertex (0, 0) of the display screen 301, the height direction of the display screen 301 is the X axis, and the width direction is the Y axis. The boundary coordinates of the preloaded Stack 202 are (H, 0, 2H, H), wherein H is the height of the screen, that is, the area within the left solid line rectangle is the main screen display area, and the area within the right dotted rectangle is the preloaded display area.

The reasons for setting boundaries of the preloaded Stack are as follows:
Setting the abscissa of the top left corner to be H is to prevent the display screen (also called as the main screen) from being displayed to the interface of the preloaded application in the horizontal display mode. Because the main screen has not only the vertical display mode but also the horizontal display mode, in order to prevent the main screen display area from displaying some part of the preloaded application in the horizontal display mode, the abscissa of the top left corner of the rectangular area corresponding to the preloaded stack is set as the height of the screen.

Setting the ordinate of the top left corner to be 0 is for the preloaded application to calculate the height of the status bar correctly. In order to design the user interface (UI) better, the Android application defines a top status bar. If the ordinate of the top left corner mentioned above is not equal to 0, the height of the status bar may be wrong.

Setting the abscissa of the bottom right corner to be 2H (2 times of the height of the screen), that is, the width of the rectangle corresponding to the preloaded stack equal to the height of screen, is to enable the size of the preloaded stack to contain the horizontal screen application at the time of preloading (i.e., the application whose interface is in a horizontal display mode).

Setting the ordinate of the bottom right corner to be H, that is, setting the height of the rectangle corresponding to the preloaded stack to be equal to the height of the screen, is to enable the size of the preloaded stack to contain the vertical screen application at the time of preloading (i.e., the application whose interface is in a vertical display mode).

For the above reasons, the inventor(s) sets the size of the preloaded stack as (H, 0, 2H, H).

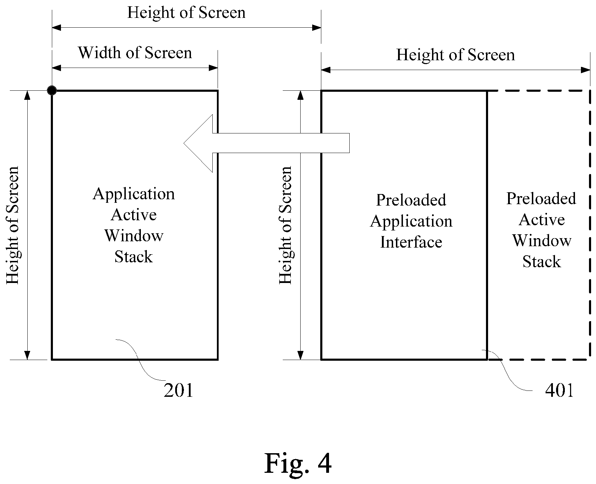

In addition, FIG. 4 is a schematic diagram of migration of an application interface provided in an embodiment of the present disclosure. As shown in FIG. 4, when receiving an instruction of running the target application, the application interface 401 corresponding to the target application included in the preloaded active window stack is migrated to the display screen 201 for display. Specifically, the task to which the preloaded application interface belongs is migrated to the top of the application active window Stack, and the size information, the configuration information, and the visibility of the task are updated, so that the application interface can be displayed normally on the display screen.

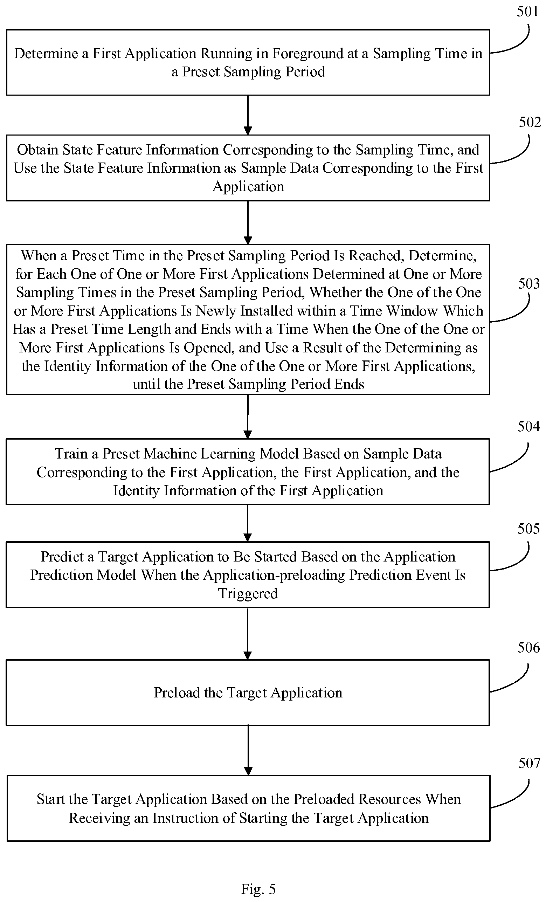

FIG. 5 is a flow chart of another method of establishing an application prediction model provided in an embodiment of the present disclosure. The method includes the following steps:
Step 501, determine a first application running in foreground at a sampling time in a preset sampling period.
Step 502, obtain state feature information corresponding to the sampling time, and use the state feature information as sample data corresponding to the first application.

The state feature information includes at least one of the followings: time information, date category, on/off state of a mobile data network, connection status of a wireless hotspot, identity information of a connected wireless hotspot, duration of a current application staying in background, last time when a current application was switched to background, plug-in status of a headphone jack, charging status, battery level information, display duration of a screen, motion status of a mobile terminal, or location information.

Step 503, when a preset time in the preset sampling period is reached, determine, for each one of one or more first applications determined at one or more sampling times in the preset sampling period, whether the one of the one or more first applications is newly installed within a time window having a preset time length and ending with a time when the one of the one or more first applications is opened, and use a result of the determining as the identity information of the one of the one or more first applications, until the preset sampling period ends.

Exemplarily, the preset sampling period is set as one month, and there is 30 days in this month. The middle day of this month can be set as the preset time. That is, from the 16th day in the preset sampling period, it is determined for each one of the determined first applications as to whether the one of the first applications is newly installed within the time window having the preset time length and ending with the time when the one of the first applications is opened, and use the result of the determining as the identity information of the one of the first applications, until the end of the 30th day.

Step 504, train a preset machine learning model based on sample data corresponding to the first application, the first application, and the identity information of the first application.

A sample identity of the sample data includes the first application and identity information of the first application.

Exemplarily, in the case that the state feature information is used as the sample data corresponding to the first application, the data format of the training samples (sample data with sample identities) used in generating the application prediction model may be expressed as: (state feature information → APPₜ, identity information of APPₜ).

Step 505, predict a target application to be started based on the application prediction model when the application-preloading prediction event is triggered.

The target application can be one or multiple.

Step 506, preload the target application.

For example, if the target application is WeChat, the startup resources corresponding to WeChat can be preloaded. For example, corresponding hardware resources can be allocated to WeChat, and the relevant data required for startup can be loaded based on the allocated hardware resources. Exemplarily, it may include startup of the application process of WeChat, startup of the application service, allocation of the memory, reading of the file content, and acquisition of the network data.

Step 507, start the target application based on the preloaded resources when receiving an instruction of starting the target application.

Exemplarily, after a user clicks on the desktop icon of WeChat, the instruction of starting WeChat is received. Starting the WeChat based on the preloaded resources can effectively improve the startup speed of WeChat.

In the method of establishing an application prediction model provided in embodiments of the present disclosure, when a preset time in the preset sampling period is reached, it is determined for each one of the determined first applications as to whether the one of the first applications is newly installed within a time window having a preset time length and ending with the time when the one of the first applications is opened, and the result of the determining is used as the identity information of the one of the first applications, until the preset sampling period ends, wherein the state feature information is used as the sample data corresponding to the first application. With the method, the data amount to be processed in determining whether the acquired first application is a newly installed application during the preset sampling period can be greatly reduced while ensuring the precision of training the application prediction model, and the speed of training the application prediction model can also be increased, thereby further increasing the speed of starting the application.

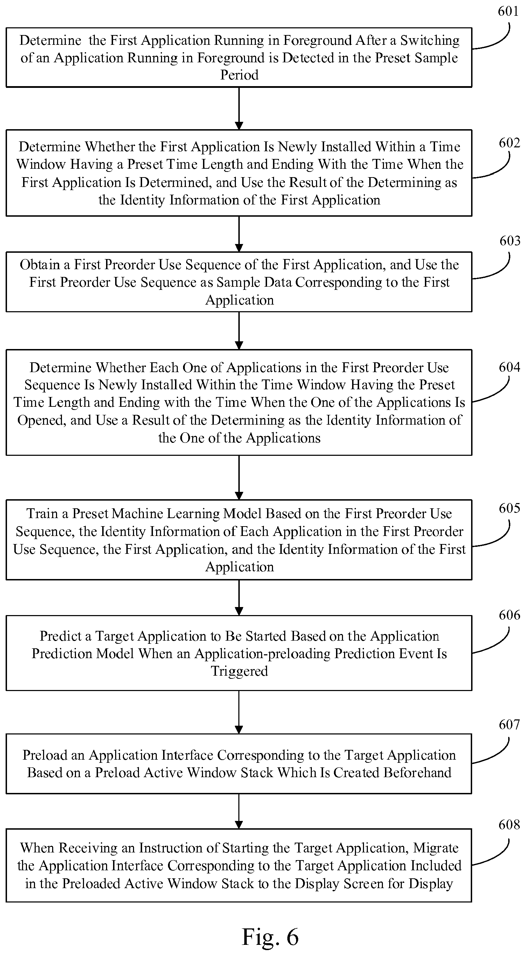

FIG. 6 is a flow chart of another method of establishing an application prediction model provided in an embodiment of the present disclosure. This method includes the following steps:

Step 601, determine the first application running in foreground after a switching of an application running in foreground is detected in a preset sampling period.

Exemplarily, when detecting that the application running in foreground is switched from WeChat to Alipay, it can be determined that the first application running in foreground after the switching is Alipay.

Step 602, determine whether the first application is newly installed within a time window having a preset time length and ending with the time when the first application is determined, and use the result of the determining as the identity information of the first application.

Exemplarily, if it is detected at 16:00 that the application running in foreground is switched from WeChat to Alipay, then the determining time of the first application is 16:00. If the preset time length of the time window is set as 30 minutes and the installation time of Alipay is 8:00, it can be determined that Alipay is not a newly installed application. Then the identity information of Alipay can be set as "0". If the installation time of Alipay is 15:40, it can be determined that Alipay is a newly installed application, and the identity information of Alipay can be set as "1".

Step 603, obtain a first preorder use sequence of the first application, and use the first preorder use sequence as sample data corresponding to the first application.

Exemplarily, if Alipay's first preorder use sequence is Jingdong Mall-Taobao-WeChat, then Jingdong Mall-Taobao-WeChat is used as the sample data corresponding to Alipay.

Step 604, determine whether each one of applications in the first preorder use sequence is newly installed within the time window having the preset time length and ending from the time when the one of the applications is opened, and use a result of the determining as the identity information of the one of the applications.

Exemplarily, it is respectively determined as to whether each of Jingdong Mall, Taobao, and WeChat is newly installed, and the results of the determining are respectively used as the identity information of respective applications. For example, the results of the determining are: (Jingdong Mall, 0, Taobao, 1, WeChat, 0).

Step 605, train a preset machine learning model based on the first preorder use sequence, the identity information of each application in the first preorder use sequence, the first application, and the identity information of the first application.

The identity information of each application in the first preorder use sequence is included in the sample data corresponding to the first application.

Exemplarily, this piece of sample data with the sample identity is: (Jingdong Mall, 0, Taobao, 1, WeChat, 0→ Alipay, 1).

Step 606, predict a target application to be started based on the application prediction model when that an application-preloading prediction event is triggered.

Step 607, preload an application interface corresponding to the target application based on a preload active window stack which is created beforehand.

The boundary coordinates corresponding to the preloaded active window stack are outside the coordinate range of the display screen.

Step 608, when receiving an instruction of starting the target application, migrate the application interface corresponding to the target application included in the preloaded active window stack to the display screen for display.

Exemplarily, after the user clicks on the desktop icon corresponding to Gaode Map, the instruction of starting Gaode Map is received. The application interface corresponding to Gaode Map included in the pre-loading active window stack is migrated to the display screen for display.

It should be noted that, in embodiments of the present disclosure, the execution sequence of step 602 and step 603 is not specifically limited. Step 602 may be performed first, and then step 603 is performed; or step 603 may be performed first, and then step 602 is performed.

In the method of establishing an application prediction model provided by embodiments of the present disclosure, the determining of the first application running in foreground can be made after the switching of the application running in foreground is detected, thereby effectively avoiding collecting excessive useless first applications and sample data corresponding to the first applications. By determining whether each one of applications in the first preorder use sequence is a newly installed application, using the result of the determining as the identity information of the one of the applications, and taking the identity information of each one of the applications in the first preorder use sequence as part of the sample data corresponding to the first application, the dimension of the training sample data for the application prediction model can be increased, and the preference of the user for the newly installed applications can be learned, thereby further improving the accuracy of the application prediction model.

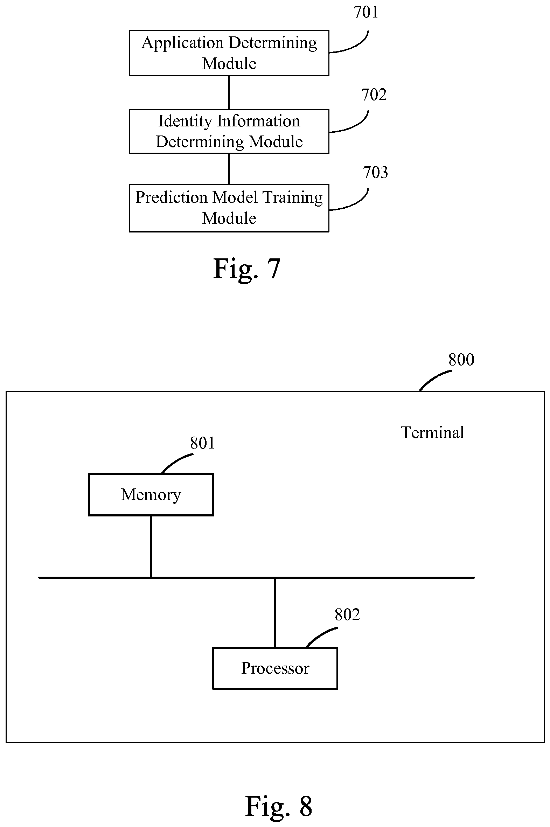

FIG. 7 is a block diagram of an apparatus for establishing an application prediction model provided in an embodiment of the present application. The apparatus may be implemented in software and/or hardware, and is generally integrated in a terminal. The application prediction model may be obtained by executing the method of establishing an application prediction model. As shown in FIG. 7, the apparatus includes:
an application determining module 701 configured to determine a first application running in foreground at a sampling time in a preset sampling period;
an identity information determining module 702 configured to determine whether the first application is newly installed within a time window having a preset time length and ending with the sampling time, and use a result of the determining as identity information of the first application;
a prediction model training module 703 configured to train a preset machine learning model based on sample data corresponding to the first application, the first application, and the identity information of the first application so as to obtain the application prediction model, wherein a sample identity of the sample data includes the identity information of the first application and the first application.

The apparatus for establishing an application prediction model provided in the embodiment of the present disclosure determines a first application running in foreground at a sampling time in a preset sampling period, determines whether the first application is newly installed within a time window having a preset time length and ending with the sampling time, and uses the result of the determining as identity information of the first application and then trains a preset machine learning model based on sample data corresponding to the first application, the first application, and the identity information of the first application to obtain the application prediction model, wherein a sample identity of the sample data includes the first application and the identity information of the first application. By adopting the above technical solution, the application prediction model can learn the user's preference for the newly installed applications, and the precision of training the application prediction model can be effectively improved, thereby improving the accuracy in predicting an application to be started.

In some examples, the identity information determining module is configured to
when the preset time in the preset sampling period is reached, determine, for each one of one or more first applications determined at one or more sampling times in the preset sampling period, whether the one of the one or more first applications is newly installed within a time window having the preset time length and ending with a time when the one of the one or more first applications is opened, and use the result of the determining as the identity information of the one of the one or more first applications, until the preset sampling period ends.

In some examples, the application determining module is configured to determine, when a switching of an application running in foreground in the preset sampling period is detected, the first application running in foreground after the switching;
wherein the prediction model training module includes:
a sample data obtaining unit configured to obtain a first preorder use sequence of the first application, and use the first preorder use sequence as the sample data corresponding to the first application;
a prediction model training unit configured to train the preset machine learning model based on the sample data corresponding to the first application, the first application, and the identity information of the first application.

In some examples, the apparatus further includes:
an application determining module configured to: before training the preset machine learning model based on the sample data corresponding to the first application, the first application, and the identity information of the first application, determine whether each one of applications in the first preorder use sequence is newly installed within a time window having a preset time length and ending with a time when the one of the applications is opened, and use result of the determining as the identity information of the one of the applications;
wherein the prediction model training unit is configured to:
   train the preset machine learning model based on the first preorder use sequence, the identity information of each application in the first preorder use sequence, the first application and the identity information of the first application, wherein the identity information of each application in the first preorder use sequence is included in the sample data corresponding to the first application.

In some examples, the prediction model training module is configured to: obtain state feature information corresponding to the sampling time, and use the state feature information as the sample data corresponding to the first application; and train the preset machine learning model based on the sample data corresponding to the first application, the first application, and the identity information of the first application.

In some examples, the state feature information includes at least one of the followings:
time information, date category, on/off state of a mobile data network, connection status of a wireless hotspot, identity information of a connected wireless hotspot, duration of the current application staying in background, last time when a current application was switched to background, plug-in status of a headphone jack, charging status, battery level information, display duration of a screen, motion status of a mobile terminal, or location information.

In some examples, the apparatus further includes:
a target application prediction module configured to predict, after detecting that an application-preloading prediction event is triggered, a target application to be started based on the application prediction model;
an application preloading module configured to preload the target application.

In some examples, the target application prediction module is configured to: preload an application interface corresponding to the target application based on a preloaded active window stack which is created beforehand, wherein boundary coordinates corresponding to the preloaded active window stack are outside a coordinate range of a display screen.

One of ordinary skill in the art will understand that the above described modules/units can each be implemented by hardware, or software, or a combination of hardware and software. One of ordinary skill in the art will also understand that multiple ones of the above described modules/units may be combined as one module/unit, and each of the above described modules/units may be further divided into a plurality of sub-modules/sub-units.

Embodiments of the present disclosure further provide a storage medium including computer executable instructions which are configured to implement, when executed by a computer processor, a method of establishing an application prediction model. This method includes:
determining a first application running in foreground at a sampling time in a preset sampling period;
determining whether the first application is newly installed within a time window having a preset time length and ending with the sampling time, and using a result of the determining as an identity information of the first application; and
training a preset machine learning model based on sample data corresponding to the first application, the first application, and the identity information of the first application, to obtain the application prediction model, wherein a sample identity of the sample data includes the identity information of the first application and the first application.

As for a storage medium containing computer executable instructions provided by embodiments of the present disclosure, the computer executable instructions thereon are not limited to the establishing operation of an application prediction model as described above, and may also perform relevant operations in the method of establishing an application prediction model provided by any of embodiments of the present disclosure.

Embodiments of the present disclosure provide a terminal, in which the apparatus of establishing an application prediction model provided by embodiments of the present disclosure can be integrated. FIG. 8 is a block diagram of a terminal provided in an embodiment of the present disclosure. The terminal 800 may include a memory 801 and a processor 802, wherein a computer program is stored on the memory and operable by the processor. The processor 802 executes the computer program to implement the method of establishing an application prediction model as described in embodiments of the present disclosure.

The terminal provided by embodiments of the present disclosure can enable the application prediction model to learn the user's preference for the newly installed applications, and can effectively improve the precision of training the application prediction model, thereby improving the accuracy in predicting an application to be started.

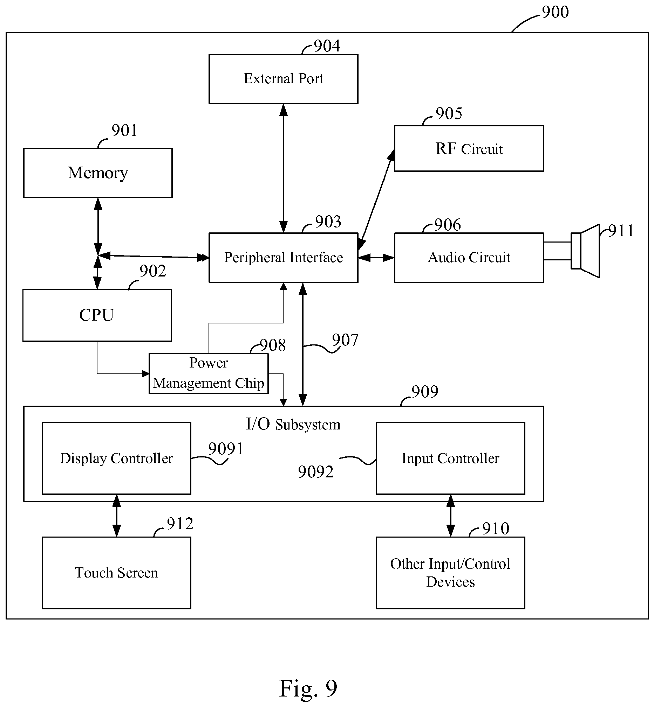

FIG. 9 is a block diagram of another terminal provided in an embodiment of the present disclosure. The terminal may include a housing (not shown in FIG.9), a memory 901, a central processing unit (CPU) 902, a circuit board (not shown in FIG.9), and a power supply circuit (not shown in FIG.9). The circuit board is disposed inside the space enclosed by the housing. The CPU 902 and the memory 901 are disposed on the circuit board. The power supply circuit is configured to supply power to each circuit or element of the terminal. The memory 901 is configured to store executable program code. The CPU 902 runs a computer program corresponding to the executable program code by reading the executable program code stored in the memory 901 to implement the following steps of:
determining a first application running in foreground at a sampling time in a preset sampling period;
determining whether the first application is newly installed within a time window having a preset time length and ending with the sampling time, and using a result of the determining as identity information of the first application; and
training a preset machine learning model based on sample data corresponding to the first application, the first application, and the identity information of the first application, to obtain the application prediction model, wherein a sample identity of the sample data includes the identity information of the first application and the first application.

The terminal further includes a peripheral interface 903, an RF (Radio Frequency) circuit 905, an audio circuit 906, a speaker 911, a power management chip 908, an input/output (I/O) subsystem 909, other input/control devices 910, a touch screen 912 and an external port 904. These components are communicated via one or more communication buses or signal lines 907.

It should be understood that the illustrated terminal 900 is merely one example of a terminal, and the terminal 900 may have more or fewer components than those shown in the figure and have combined two or more components or different component configurations. The various components shown in the figures can be implemented in hardware, software, or a combination thereof, including one or more signal processing and/or application specific integrated circuits.

The terminal for establishing an application prediction model provided in this embodiment is described in detail below, wherein a mobile phone is taken as an example of the terminal.

The memory 901 accessible to the CPU 902, the peripheral interface 903, and the like can include a high speed random access memory, and can also include a non-volatile memory, such as one or more magnetic disk storage devices, flash memory devices or other volatile solid-state storage devices.

The peripheral interface 903 can connect input and output peripherals of the device to the CPU 902 and the memory 901.

The I/O subsystem 909 can connect the input and output peripherals on the device, such as the touch screen 912 and other input/control devices 910, to the peripheral interface 903. The I/O subsystem 909 can include a display controller 9091 and one or more input controllers 9092 for controlling other input/control devices 910, wherein the one or more input controllers 9092 receive/transmit electrical signals from/to other input/control devices 910 which may include physical buttons (press buttons, rocker arm buttons, etc.), a dial, a slide switch, a joystick or a click wheel. It should be noted that the input controller 9092 can be connected with any of a keyboard, an infrared port, a USB interface, and a pointing device such as a mouse.

The touch screen 912 which is an input interface and an output interface between the user terminal and the user displays a visual output which may include graphics, text, icons, videos, etc., to the user.

The display controller 9091 in the I/O subsystem 909 receives/transmits electrical signals from/to the touch screen 912. The touch screen 912 detects a touch on the touch screen, and the display controller 9091 converts the detected touch into an interaction with the user interface objects displayed on the touch screen 912, i.e., realizes the human-computer interaction. The user interface objects displayed on the touch screen 912 may be an icon of running a game, an icon of being connected to a corresponding network, and the like. It should be noted that the device may also include an optical mouse, which is a touch-sensitive surface that does not display a visual output, or an extension of a touch-sensitive surface formed of the touch screen.

The RF circuit 905 is mainly used for establishing a communication between the mobile phone and the wireless network (i.e., the network side), thereby realizing data reception and transmission between the mobile phone and the wireless network, such as sending and receiving short messages, emails, etc.. Specifically, the RF circuit 905 receives and transmits a RF signal which is also referred to as an electromagnetic signal. The RF circuit 905 converts an electrical signal into an electromagnetic signal or vice versa, and communicates through the electromagnetic signal with a communication network and other devices. The RF circuitry 905 may include known circuits for performing these functions, which includes, but not limited to, an antenna system, an RF transceiver, one or more amplifiers, a tuner, one or more oscillators, a digital signal processor, a CODEC (coder-decoder) chipset, a subscriber identity module (SIM), etc..

The audio circuit 906 is mainly used to receive audio data from the peripheral interface 903, convert the audio data into an electrical signal, and transmit the electrical signal to the speaker 911.

The speaker 911 is used to restore a voice signal received by the mobile phone from a wireless network through the RF circuit 905 to sound and convey the sound to the user.

The power management chip 908 is used to supply power to the hardware connected to the CPU 902, the I/O subsystem, and the peripheral interface and to manage the power.

The apparatus, the storage medium and the terminal for establishing an application prediction model provided in the above embodiments can execute the method of establishing an application prediction model provided by any embodiment of the present disclosure, and have corresponding function modules and beneficial effects of executing the method. For technical details that are not described in detail in the above embodiments, reference may be made to the method of establishing an application prediction model provided by any embodiment of the present disclosure.

## Claims

1. A method of establishing an application prediction model comprising:
determining (101, 501) at least one first application running in foreground at a sampling time in a preset sampling period;
determining (102) whether the at least one first application is newly installed within a time
window having a preset time length and ending with the sampling time, to obtain identity information of the at least one first application, wherein the identity information is configured to identify whether or not the at least one first application is newly installed; and
training (103, 504) a preset machine learning model based on sample data corresponding to the at least one first application and a sample identity of the sample data,
wherein the sample data corresponding to the at least one first application includes a preorder use sequence of the at least one first application, wherein the preorder use sequence refers to a temporal sequence, during a preset time period traced backward from a switching time of an application running in foreground, of use of applications related to the at least one first application which is currently running,
wherein the sample identity of the sample data includes the at least one first application and the identity information of the at least one first application,
wherein after obtaining the application prediction model, the method further comprises:
predicting a target application to be started based on the application prediction model when an application-preloading prediction event is triggered (505, 606); and
preloading the target application (506); and
wherein preloading the target application comprises:
preloading (607) an application interface (401) corresponding to the target application based on a preloaded active window stack (202) which is created beforehand, wherein boundary coordinates corresponding to the preloaded active window stack (202) are outside a coordinate range of a display screen (201, 301);
wherein the step of determining whether the at least one first application is newly installed within a time window having a preset time length and ending with the sampling time and using the result of the determining as identity information of the at least one first application includes:
when a preset time in the preset sampling period is reached, determining, for each one of the at least one first application determined at one or more sampling times in the preset sampling period, whether the one of the at least one first application is newly installed within the time window having the preset time length and ending with a time when the one of the at least one first application is opened, and using a result of the determining as the identity information of the one of the at least one first application, until the preset sampling period ends.

2. The method of claim 1, wherein determining at least one first application running in foreground at a sampling time in a preset sampling period comprises:
determining (601) the at least one first application running in foreground after a switching of an application running in foreground is detected in the preset sampling period.

3. The method of claim 1, wherein before training a preset machine learning model based on sample data corresponding to the at least one first application and a sample identity of the sample data, the method further comprises:
obtaining (603) the first preorder use sequence of the at least one first application as the sample data corresponding to the at least one first application.

4. The method of claim 3, wherein before training a preset machine learning model based on sample data corresponding to the at least one first application and a sample identity of the sample data, the method further comprises:
determining (604) whether each one of applications in the first preorder use sequence is installed within a time window having the preset time length and ending with a time when the one of the applications is opened, to obtain identity information of each one of the applications in the first preorder use sequence,
wherein the identity information of each one of the applications in the first preorder use sequence is included in the sample data corresponding to the at least one first application.

5. The method of claim 1, wherein before training a preset machine learning model based on sample data corresponding to the at least one first application and a sample identity of the sample data, the method further comprises:
obtaining (502) state feature information corresponding to the sampling time as the sample data corresponding to the at least one first application.

6. The method of claim 5, wherein the state feature information comprises at least one of the following:
time information, date category, on/off state of a mobile data network, connection status of a wireless hotspot, identity information of a connected wireless hotspot, duration of a current application staying in background, last time when a current application was switched to background, plug-in status of a headphone jack, charging status, battery level information, display duration of a screen, motion status of a mobile terminal, or location information.

7. The method of claim 1, wherein before training a preset machine learning model based on sample data corresponding to the at least one first application and a sample identity of the sample data, the method further comprises:
obtaining a first preorder use sequence of the at least one first application;
obtaining state feature information at respective sampling time of each of applications in the first preorder use sequence; and
using a time sequence of both the applications in the first preorder use sequence and the state feature information, as the sample data corresponding to the at least one first application.

8. An apparatus for establishing an application prediction model comprising:
an application determining module (701) configured to determine at least one first application running in foreground at a sampling time in a preset sampling period;
an identity information determining module (702) configured to determine whether the at least one first application is newly installed within a time window having a preset time length and ending with the sampling time to obtain identity information of the at least one first application, wherein the identity information is configured to identify whether or not the at least one first application is newly installed; and
a prediction model training module (703) configured to train a preset machine learning model based on sample data corresponding to the at least one first application and a sample identity of the sample data, wherein the sample corresponding to the at least one first application include a preorder use sequence of the at least one first application, wherein the preorder use sequence refers to a temporal sequence, during a preset time period traced backward from a switching time of an application running in foreground, of use of applications related to the at least one first application which is currently running,
wherein the sample identity of the sample data includes the at least one first application and the identity information of the at least one first application;
wherein the apparatus further comprises:
a module configured to predict a target application to be started based on the application prediction model when an application-preloading prediction event is triggered; and
preload the target application; and
wherein the preloading the target application comprises:
preloading an application interface (401) corresponding to the target application based on a preloaded active window stack (202) which is created beforehand, wherein boundary coordinates corresponding to the preloaded active window stack (202) are outside a coordinate range of a display screen (201, 301);
wherein the identity information determining module (702) is configured to:
when a preset time in the preset sampling period is reached, determine, for each one of the at least one first application determined at one or more sampling times in the preset sampling period, whether the one of the at least one first application is newly installed within the time window having the preset time length and ending with a time when the one of the at least one first application is opened, and use a result of the determining as the identity information of the one of the at least one first application, until the preset sampling period ends.

9. The apparatus of claim 8, wherein the prediction model training module (703) comprises at least one of:
a first sample data obtaining module configured to obtain the first preorder use sequence of the at least one first application and use the first preorder use sequence as the sample data corresponding to the at least one first application.

10. The apparatus of claim 8 or 9, wherein the prediction model training module (703) comprises:
a second sample data obtaining module configured to obtain state feature information corresponding to the sampling time and use the state feature information as the sample data corresponding to the at least one first application.

11. A computer program which implements, when executed by a processor (802), the method of establishing an application prediction model according to any one of claims 1-7.

## Patentansprüche

1. Verfahren zum Aufbauen eines Anwendungsvorhersagemodells, das Folgendes umfasst:
Bestimmen (101, 501) mindestens einer ersten Anwendung, die zu einer Abtastzeit in einem im Voraus eingestellten Abtastzeitraum im Vordergrund läuft;
Bestimmen (102), ob die mindestens eine erste Anwendung in einem Zeitfenster, das eine im Voraus eingestellte Zeitdauer aufweist und mit der Abtastzeit endet, neu installiert wurde, um Kennungsinformationen der mindestens einen ersten Anwendung zu erhalten, wobei die Kennungsinformationen konfiguriert sind, zu identifizieren, ob die mindestens eine erste Anwendung neu installiert ist oder nicht, und
Trainieren (103, 504) eines im Voraus eingestellten Modells für maschinelles Lernen auf der Grundlage von Abtastwertdaten, die der mindestens einen ersten Anwendung entsprechen, und einer Abtastwertkennung der Abtastwertdaten, wobei
die Abtastwertdaten, die der mindestens einen ersten Anwendung entsprechen, eine Präordnungsverwendungsabfolge der mindestens einen ersten Anwendung enthalten, wobei die Präordnungsverwendungsabfolge sich auf eine zeitliche Abfolge während eines im Voraus eingestellten Zeitraums, der von einer Wechselzeit einer Anwendung, die im Vordergrund läuft, rückwärts nachgezeichnet wird, der Verwendung von Anwendungen, die mit der mindestens einen ersten Anwendung, die gegenwärtig läuft, in Beziehung stehen, bezieht,
die Abtastwertkennung der Abtastwertdaten die mindestens eine erste Anwendung und die Kennungsinformationen der mindestens einen ersten Anwendung enthält,
das Verfahren nach dem Erhalten des Anwendungsvorhersagemodells ferner Folgendes umfasst:
Vorhersagen einer Zielanwendung, die gestartet werden soll, auf der Grundlage des Anwendungsvorhersagemodells, wenn ein Anwendungsvorladevorhersageereignis (505, 606) ausgelöst wird; und
Vorladen der Zielanwendung (506); und
das Vorladen der Zielanwendung Folgendes umfasst:
Vorladen (607) einer Anwendungsschnittstelle (401), die der Zielanwendung entspricht, auf der Grundlage eines Stapels (202) eines vorgeladenen aktiven Fensters, der vorher erstellt wurde, wobei Begrenzungskoordinaten, die dem Stapel (202) eines vorgeladenen aktiven Fensters entsprechen, außerhalb eines Koordinatenumfangs eines Anzeigebildschirms (201, 301) liegen; wobei
der Schritt des Bestimmens, ob die mindestens eine erste Anwendung in einem Zeitfenster, das eine im Voraus eingestellte Zeitdauer aufweist und mit der Abtastzeit endet, neu installiert wurde, und das Verwenden des Ergebnisses des Bestimmens als Kennungsinformationen der mindestens einen ersten Anwendung Folgendes enthält:
Bestimmen, wenn eine im Voraus eingestellte Zeit im im Voraus eingestellten Abtastzeitraum erreicht wird, für jede der mindestens einen ersten Anwendung, die zu einer oder mehreren Abtastzeiten im im Voraus eingestellten Abtastzeitraum bestimmt wurde, ob die eine der mindestens einen ersten Anwendung in dem Zeitfenster, das die im Voraus eingestellte Zeitdauer aufweist und mit einer Zeit, zu der die eine der mindestens einen ersten Anwendung geöffnet wird, endet, neu installiert wurde^, und Verwenden eines Ergebnisses des Bestimmens als die Kennungsinformationen der einen der mindestens einen ersten Anwendung, bis der im Voraus eingestellte Abtastzeitraum endet.

2. Verfahren nach Anspruch 1, wobei das Bestimmen mindestens einer ersten Anwendung, die zu einer Abtastzeit in einem im Voraus eingestellten Abtastzeitraum im Vordergrund läuft, Folgendes umfasst:
Bestimmen (601) der mindestens einen ersten Anwendung, die im Vordergrund läuft, nachdem ein Wechseln einer Anwendung, die im Vordergrund läuft, im im Voraus eingestellten Abtastzeitraum detektiert worden ist.

3. Verfahren nach Anspruch 1, wobei das Verfahren vor dem Trainieren eines im Voraus eingestellten Modells für maschinelles Lernens auf der Grundlage von Abtastwertdaten, die der mindestens einen ersten Anwendung entsprechen, und einer Abtastwertkennung der Abtastwertdaten, ferner Folgendes umfasst:
Erhalten (603) der ersten Präordnungsverwendungsabfolge der mindestens einen ersten Anwendung als die Abtastwertdaten, die der mindestens einen ersten Anwendung entsprechen.

4. Verfahren nach Anspruch 3, wobei vor dem Trainieren eines im Voraus eingestellten Modells für maschinelles Lernens auf der Grundlage von Abtastwertdaten, die der mindestens einen ersten Anwendung entsprechen, und einer Abtastwertkennung der Abtastwertdaten, das Verfahren ferner Folgendes umfasst:
Bestimmen (604), ob jede von Anwendungen in der ersten Präordnungsverwendungsabfolge in einem Zeitfenster installiert wurde, das die im Voraus eingestellte Zeitdauer aufweist und mit einer Zeit, zu der die eine der Anwendungen geöffnet wird, endet, um Kennungsinformationen jeder der Anwendungen in der ersten Präordnungsverwendungsabfolge zu erhalten, wobei
die Kennungsinformationen jeder der Anwendungen in der ersten Präordnungsverwendungsabfolge in den Abtastwertdaten enthalten sind, die der mindestens einen ersten Anwendung entsprechen.

5. Verfahren nach Anspruch 1, wobei vor dem Trainieren eines im Voraus eingestellten Modells für maschinelles Lernens auf der Grundlage von Abtastwertdaten, die der mindestens einen ersten Anwendung entsprechen, und einer Abtastwertkennung der Abtastwertdaten, das Verfahren ferner Folgendes umfasst:
Erhalten (502) von Zustandsmerkmalsinformationen, die der Abtastzeit entsprechen, als die Abtastwertdaten, die der mindestens einen ersten Anwendung entsprechen.

6. Verfahren nach Anspruch 5, wobei die Zustandsmerkmalsinformationen Folgendes umfassen:
Zeitinformationen und/oder eine Datumskategorie und/oder einen Ein/Aus-Zustand eines Mobildatennetzes und/oder einen Verbindungsstatus eines drahtlosen Hotspots und/oder Kennungsinformationen eines verbundenen drahtlosen Hotspots und/oder eine Dauer, für die eine aktuelle Anwendung im Hintergrund bleibt, und/oder ein letztes Mal, wenn eine aktuelle Anwendung zum Hintergrund gewechselt wurde, und/oder einen Einsteckstatus einer Kopfhörerbuchse und/oder einen Ladezustand und/oder Batteriepegelinformationen und/oder eine Anzeigedauer eines Bildschirms und/oder einen Bewegungszustand eines mobilen Endgeräts und/oder Ortsinformationen.

7. Verfahren nach Anspruch 1, wobei das Verfahren vor dem Trainieren eines im Voraus eingestellten Modells für maschinelles Lernens auf der Grundlage von Abtastwertdaten, die der mindestens einen ersten Anwendung entsprechen, und einer Abtastwertkennung der Abtastwertdaten ferner Folgendes umfasst:
Erhalten einer ersten Präordnungsverwendungsabfolge der mindestens einen ersten Anwendung;
Erhalten von Zustandsmerkmalsinformationen zu einer jeweiligen Abtastzeit jeder von Anwendungen in der ersten Präordnungsverwendungsabfolge und
Verwenden einer zeitlichen Abfolge sowohl der Anwendungen in der ersten Präordnungsverwendungsabfolge als auch der Zustandsmerkmalsinformationen als die Abtastwertdaten, die der mindestens einen ersten Anwendung entsprechen.

8. Vorrichtung zum Aufbauen eines Anwendungsvorhersagemodells, die Folgendes umfasst:
ein Anwendungsbestimmungsmodul (701), das konfiguriert ist, mindestens eine erste Anwendung zu bestimmen, die zu einer Abtastzeit in einem im Voraus eingestellten Abtastzeitraum im Vordergrund läuft;
ein Kennungsinformationsbestimmungsmodul (702), das konfiguriert ist, zu bestimmen, ob die mindestens eine erste Anwendung in einem Zeitfenster, das eine im Voraus eingestellte Zeitdauer aufweist und mit der Abtastzeit endet, neu installiert wurde, um Kennungsinformationen der mindestens einen ersten Anwendung zu erhalten, wobei die Kennungsinformationen konfiguriert sind, zu identifizieren, ob die mindestens eine erste Anwendung neu installiert ist oder nicht; und
ein Vorhersagemodelltrainingsmodul (703), das konfiguriert ist, ein im Voraus eingestelltes Modell für maschinelles Lernen auf der Grundlage von Abtastwertdaten, die der mindestens einen ersten Anwendung entsprechen, und einer Abtastwertkennung der Abtastwertdaten zu trainieren, wobei der Abtastwert, der der mindestens einen ersten Anwendung entspricht, eine Präordnungsverwendungsabfolge der mindestens einen ersten Anwendung enthält und die Präordnungsverwendungsabfolge sich auf eine zeitliche Abfolge während eines im Voraus eingestellten Zeitraums, der von einer Wechselzeit einer Anwendung, die im Vordergrund läuft, rückwärts nachgezeichnet wird, der Verwendung von Anwendungen, die mit der mindestens einen ersten Anwendung, die gegenwärtig läuft, in Beziehung stehen, bezieht, wobei
die Abtastwertkennung der Abtastwertdaten die mindestens eine erste Anwendung und die Kennungsinformationen der mindestens einen ersten Anwendung enthält;
die Vorrichtung ferner Folgendes umfasst:
ein Modul, das konfiguriert ist, eine Zielanwendung, die gestartet werden soll, auf der Grundlage des Anwendungsvorhersagemodells vorherzusagen, wenn ein Anwendungsvorladevorhersageereignis ausgelöst wird; und
Vorladen der Zielanwendung; und
das Vorladen der Zielanwendung Folgendes umfasst:
Vorladen einer Anwendungsschnittstelle (401), die der Zielanwendung entspricht, auf der Grundlage eines Stapels (202) eines vorgeladenen aktiven Fensters, der vorher erstellt wurde, wobei Begrenzungskoordinaten, die dem Stapel (202) eines vorgeladenen aktiven Fensters entsprechen, außerhalb eines Koordinatenumfangs eines Anzeigebildschirms (201, 301) liegen; wobei
das Kennungsinformationsbestimmungsmodul (702) konfiguriert ist zum:
Bestimmen, wenn eine im Voraus eingestellte Zeit im im Voraus eingestellten Abtastzeitraum erreicht wird, für jede der mindestens einen ersten Anwendung, die zu einer oder mehreren Abtastzeiten im im Voraus eingestellten Abtastzeitraum bestimmt wurde, ob die eine der mindestens einen ersten Anwendung in dem Zeitfenster, das die im Voraus eingestellte Zeitdauer aufweist und mit einer Zeit, zu der die eine der mindestens einen ersten Anwendung geöffnet wird, endet, neu installiert wurde, und Verwenden eines Ergebnisses des Bestimmens als die Kennungsinformationen der einen der mindestens einen ersten Anwendung, bis der im Voraus eingestellte Abtastzeitraum endet.

9. Vorrichtung nach Anspruch 8, wobei das Vorhersagemodelltrainingsmodul (703) Folgendes umfasst:
mindestens ein erstes Abtastwertdatenerhaltemodul, das konfiguriert ist, die erste Präordnungsverwendungsabfolge der mindestens einen ersten Anwendung zu erhalten und die erste Präordnungsverwendungsabfolge als die Abtastwertdaten, die der mindestens einen ersten Anwendung entsprechen, zu verwenden.

10. Vorrichtung nach Anspruch 8 oder 9, wobei das Vorhersagemodelltrainingsmodul (703) Folgendes umfasst:
ein zweites Abtastwertdatenerhaltemodul, das konfiguriert ist, Zustandsmerkmalsinformationen, die der Abtastzeit entsprechen, zu erhalten und die Zustandsmerkmalsinformationen als die Abtastwertdaten, die der mindestens einen ersten Anwendung entsprechen, zu verwenden.

11. Computerprogramm, das, wenn es durch einen Prozessor (802) ausgeführt wird, das Verfahren zum Aufbauen eines Anwendungsvorhersagemodells nach einem der Ansprüche 1-7 implementiert.

## Revendications

1. Procédé d'établissement d'un modèle de prédiction d'application comprenant de :
déterminer (101, 501) au moins une première application s'exécutant au premier plan à un moment d'échantillonnage dans une période d'échantillonnage prédéfinie ;
déterminer (102) si la au moins une première application est nouvellement installée dans une fenêtre temporelle ayant une durée prédéfinie et se terminant par le moment d'échantillonnage, pour obtenir des informations d'identité de la au moins une première application, dans lequel les informations d'identité sont configurées pour identifier si la au moins une première application est nouvellement installée ou non ; et
réaliser l'apprentissage (103, 504) d'un modèle d'apprentissage automatique prédéfini sur la base de données d'échantillon correspondant à la au moins une première application et à une identité d'échantillon des données d'échantillon,
dans lequel les données d'échantillon correspondant à la au moins une première application incluent une séquence d'utilisation de préordre de la au moins une première application, dans lequel la séquence d'utilisation de préordre fait référence à une séquence temporelle, pendant une période de temps prédéfinie tracée en arrière à partir d'un moment de commutation d'une application s'exécutant en premier plan, d'utilisation d'applications liées à la au moins une première application en cours d'exécution,
dans lequel l'identité d'échantillon des données d'échantillon inclut la au moins une première application et les informations d'identité de la au moins une première application,
dans lequel après l'obtention du modèle de prédiction d'application, le procédé comprend en outre de :
prédire une application cible à démarrer sur la base du modèle de prédiction d'application lorsqu'un événement de prédiction de préchargement d'application est déclenché (505, 606) ; et
précharger l'application cible (506) ; et
dans lequel le préchargement de l'application cible comprend de :
précharger (607) une interface d'application (401) correspondant à l'application cible sur la base d'une pile de fenêtres actives préchargées (202) qui est créée au préalable, dans lequel des coordonnées de frontière correspondant à la pile de fenêtres actives préchargées (202) sont en dehors d'une plage de coordonnées d'un écran d'affichage (201, 301) ;
dans lequel l'étape consistant à déterminer si la au moins une première application est nouvellement installée dans une fenêtre temporelle ayant une durée prédéfinie et se terminant par le moment d'échantillonnage et à utiliser le résultat de la détermination en tant qu'informations d'identité de la au moins une première application inclut de :
lorsqu'un temps prédéfini dans la période d'échantillonnage prédéfinie est atteint, déterminer, pour chacune de la au moins une première application déterminée à un ou plusieurs moments d'échantillonnage dans la période d'échantillonnage prédéfinie, si ladite une de la au moins une première application est nouvellement installée dans la fenêtre temporelle ayant la durée prédéfinie et se terminant par un moment où ladite une de la au moins une première application est ouverte, et utiliser un résultat de la détermination en tant qu'informations d'identité de ladite une de la au moins une première application, jusqu'à ce que la période d'échantillonnage prédéfinie se termine.

2. Procédé selon la revendication 1, dans lequel la détermination d'au moins une première application s'exécutant au premier plan à un moment d'échantillonnage dans une période d'échantillonnage prédéfinie comprend de :
déterminer (601) la au moins une première application s'exécutant au premier plan après qu'une commutation d'une application s'exécutant au premier plan est détectée dans la période d'échantillonnage prédéfinie.

3. Procédé selon la revendication 1, dans lequel, avant l'apprentissage d'un modèle d'apprentissage automatique prédéfini sur la base de données d'échantillon correspondant à la au moins une première application et à une identité d'échantillon des données d'échantillon, le procédé comprend en outre de :
obtenir (603) la première séquence d'utilisation de préordre de la au moins une première application en tant que données d'échantillon correspondant à la au moins une première application.

4. Procédé selon la revendication 3, dans lequel, avant l'apprentissage d'un modèle d'apprentissage automatique prédéfini sur la base de données d'échantillon correspondant à la au moins une première application et à une identité d'échantillon des données d'échantillon, le procédé comprend en outre de :
déterminer (604) si chacune des applications dans la première séquence d'utilisation de préordre est installée dans une fenêtre temporelle ayant la durée prédéfinie et se terminant par un moment où ladite une des applications est ouverte, pour obtenir des informations d'identité de chacune des applications dans la première séquence d'utilisation de préordre,
dans lequel les informations d'identité de chacune des applications dans la première séquence d'utilisation de préordre sont incluses dans les données d'échantillon correspondant à la au moins une première application.

5. Procédé selon la revendication 1, dans lequel, avant l'apprentissage d'un modèle d'apprentissage automatique prédéfini sur la base de données d'échantillon correspondant à la au moins une première application et à une identité d'échantillon des données d'échantillon, le procédé comprend en outre de :
obtenir (502) des informations de caractéristiques d'état correspondant au moment d'échantillonnage en tant que données d'échantillon correspondant à la au moins une première application.

6. Procédé selon la revendication 5, dans lequel les informations de caractéristiques d'état comprennent au moins l'un des éléments suivants :
des informations temporelles, la catégorie de date, l'état activé/désactivé d'un réseau de données mobiles, l'état de connexion d'un point d'accès sans fil, des informations d'identité d'un point d'accès sans fil connecté, la durée d'une application en cours restant en arrière-plan, la dernière fois qu'une application en cours a été commutée en arrière-plan, l'état de connexion d'une prise casque, l'état de charge, des informations de niveau de batterie, la durée d'affichage d'un écran, l'état de mouvement d'un terminal mobile, ou des informations de localisation.

7. Procédé selon la revendication 1, dans lequel, avant l'apprentissage d'un modèle d'apprentissage automatique prédéfini sur la base de données d'échantillon correspondant à la au moins une première application et à une identité d'échantillon des données d'échantillon, le procédé comprend en outre de :
obtenir une première séquence d'utilisation de préordre de la au moins une première application ;
obtenir des informations de caractéristiques d'état à un moment d'échantillonnage respectif de chacune des applications dans la première séquence d'utilisation de préordre ; et
utiliser une séquence temporelle à la fois des applications dans la première séquence d'utilisation de préordre et des informations de caractéristiques d'état, en tant que données d'échantillon correspondant à la au moins une première application.

8. Appareil pour établir un modèle de prédiction d'application comprenant :
un module de détermination d'application (701) configuré pour déterminer au moins une première application s'exécutant au premier plan à un moment d'échantillonnage dans une période d'échantillonnage prédéfinie ;
un module de détermination d'informations d'identité (702) configuré pour déterminer si la au moins une première application est nouvellement installée dans une fenêtre temporelle ayant une durée prédéfinie et se terminant par le moment d'échantillonnage pour obtenir des informations d'identité de la au moins une première application, dans lequel les informations d'identité sont configurées pour identifier si la au moins une première application est nouvellement installée ou non ; et
un module d'apprentissage de modèle de prédiction (703) configuré pour réaliser l'apprentissage d'un modèle d'apprentissage automatique prédéfini sur la base de données d'échantillon correspondant à la au moins une première application et d'une identité d'échantillon des données d'échantillon, dans lequel l'échantillon correspondant à la au moins une première application inclut une séquence d'utilisation de préordre de la au moins une première application, dans lequel la séquence d'utilisation de préordre fait référence à une séquence temporelle, pendant une période de temps prédéfinie tracée en arrière à partir d'un moment de commutation d'une application s'exécutant au premier plan, d'utilisation d'applications liées à la au moins une première application en cours d'exécution,
dans lequel l'identité d'échantillon des données d'échantillon inclut la au moins une première application et les informations d'identité de la au moins une première application ;
dans lequel l'appareil comprend en outre :
un module configuré pour prédire une application cible à démarrer sur la base du modèle de prédiction d'application lorsqu'un événement de prédiction de préchargement d'application est déclenché ; et précharger l'application cible ; et
dans lequel le préchargement de l'application cible comprend de :
précharger une interface d'application (401) correspondant à l'application cible sur la base d'une pile de fenêtres actives préchargées (202) qui est créée au préalable, dans lequel des coordonnées de frontière correspondant à la pile de fenêtres actives préchargées (202) sont en dehors d'une plage de coordonnées d'un écran d'affichage (201, 301) ;
dans lequel le module de détermination d'informations d'identité (702) est configuré pour :
lorsqu'un temps prédéfini dans la période d'échantillonnage prédéfinie est atteint, déterminer, pour chacune de la au moins une première application déterminée à un ou plusieurs moments d'échantillonnage dans la période d'échantillonnage prédéfinie, si ladite une de la au moins une première application est nouvellement installée dans la fenêtre temporelle ayant la durée prédéfinie et se terminant par un moment où ladite une de la au moins une première application est ouverte, et utiliser un résultat de la détermination en tant qu'informations d'identité de ladite une de la au moins une première application, jusqu'à ce que la période d'échantillonnage prédéfinie se termine.

9. Appareil selon la revendication 8, dans lequel le module d'apprentissage de modèle de prédiction (703) comprend au moins l'un de :
un premier module d'obtention de données d'échantillon configuré pour obtenir la première séquence d'utilisation de préordre de la au moins une première application et utiliser la première séquence d'utilisation de préordre en tant que données d'échantillon correspondant à la au moins une première application.

10. Appareil selon la revendication 8 ou 9, dans lequel le module d'apprentissage de modèle de prédiction (703) comprend :
un deuxième module d'obtention de données d'échantillon configuré pour obtenir des informations de caractéristiques d'état correspondant au moment d'échantillonnage et utiliser les informations de caractéristiques d'état en tant que données d'échantillon correspondant à la au moins une première application.

11. Programme informatique qui met en oeuvre, lorsqu'il est exécuté par un processeur (802), le procédé d'établissement d'un modèle de prédiction d'application selon l'une quelconque des revendications 1 à 7.
